# EUROPEAN PATENT APPLICATION

(11) **EP 2 551 950 A1**
(43) Date of publication of application: **30.01.2013**
(21) Application number: 11175704.3
(22) Date of filing: 28.07.2011
(51) Int. Cl.: H01M 10/44, H01M 10/42, H01M 10/48

(54) **Rechargeable battery device, and power supplying system incorporating the same**

(71) Applicant: Joy Ride Tech. Co., Ltd., Nantou (TW); Ruan, Chia-Wen, Nantou (TW)
(72) Inventor: Ruan, Chia-Wen, NANTOU CITY (TW); Wei, Eton, Nantou City (TW)
(74) Representative: Regimbeau

(57) **Abstract**

A power supplying system (10) includes multiple rechargeable battery devices (2) each including a first switch module (21), a series connection of a battery unit (22) which includes multiple rechargeable batteries connected in series with each other and a second switch module (23) connected in parallel to the first switch module (21), and a control module (24) for controlling operations of the first and second switch modules (21, 23). For each rechargeable battery device (2), the first and second switch modules (21, 23) are normally operated in an OFF-state and an ON-state, respectively, and the control module (24) enables the first and second switch modules (21, 23) to switch respectively from the OFF-state and the ON-state to an ON-state and an OFF-state upon detecting that a voltage of any one of the rechargeable batteries of the battery unit (22) is not within a predetermined voltage range during charging or discharging of the battery unit (22).

## Description

The invention relates to a battery device, and more particularly to a rechargeable battery device and a power supplying system incorporating the same.

A conventional battery box for an electric vehicle, such as those disclosed in Taiwanese Utility Module Patent Nos. M402221, M392768 and M382918, includes a plurality of battery units connected in series with each other to form a series loop. Each battery unit includes a plurality of rechargeable batteries and a control circuit. When one of the battery units malfunctions, the series loop is opened for protection purpose, thereby terminating supply of electric power to the electric vehicle. Thus, the electric vehicle if suddenly shut down in this way will result in inconvenience.

Therefore, an object of the present invention is to provide a rechargeable battery device, and a power supplying system incorporating the same that can overcome the aforesaid drawbacks of the prior art.

According to one aspect of the present invention, there is provided a rechargeable battery device operable between first and input ports. The rechargeable battery device comprises:
a first switch module having a first end, a second end, and a first control end for receiving a first control signal such that the first switch module is operable, based on the first control signal, in one of an ON-state, where the first end is connected to the second end, and an OFF-state, where the first end is disconnected from the second end;
a series connection of a battery unit and a second switch module connected between the first and second ends of the first switch module, the battery unit including a plurality of rechargeable batteries connected in series with each other, the second switch module having a second control end for receiving a second control signal such that the second switch module is operable, based on the second control signal, in one of an ON-state and an OFF-state; and
a control module connected electrically to the battery unit, the first control end of the first switch module and the second control end of the second switch module, the control module being operable output respectively to the first and second control signals to the first and second control ends of the first and second switch modules such that the first and second switch modules are respectively operated in the OFF-state and the ON-state based on the first and second control signals from the control module when in the normal state and such that the first and second switch modules are respectively operated in the ON-state and the OFF-state based on the first and second control signals from the control module when in the abnormal state.

When the rechargeable battery device is operated in the normal state, the battery unit is capable of being charged with a charge current flowing through the second switch module or supplying a voltage output.

When the control module detects that a voltage of any one of the rechargeable batteries of the battery unit is not within a predetermined voltage range during charging or discharging of the battery unit, the rechargeable battery device is switched from the normal state to the abnormal state, thereby establishing a conduction path between the first and second ends of the first switch module to terminate charging or discharging of the battery unit.

According to another aspect of the present invention, there is provided a power supplying system operable between a charge mode and a discharge mode. The power supplying system comprises:
a plurality of rechargeable battery devices connected in series with each other, each of the rechargeable battery devices being operable between a normal state and an abnormal state, and including
a first switch module having a first end, a second end, and a first control end for receiving a first control signal such that the first switch module is operable, based on the first control signal, in one of an ON-state, where the first end is connected to the second end, and an OFF-state, where the first end is disconnected from the second end,
a series connection of a battery unit and a second switch module connected between the first and second ends of the first switch module, the battery unit including a plurality of rechargeable batteries connected in series with each other, the second switch module having a second control end for receiving a second control signal such that the second switch module is operable, based on the second control signal, in one of an ON-state and an OFF-state, and
a control module connected electrically to the battery unit, the first control end of the first switch module and the second control end of the second switch module, the control module being operable to output the first and second control signals respectively to the first and second control ends of the first and second switch modules such that the first and second switch modules are respectively operated in the OFF-state and the ON-state based on the first and second control signals from the control module when in the normal state and such that the first and second switch modules are respectively operated in the ON-state and the OFF-state based on the first and second control signals from the control module when in the abnormal state.

When each of the rechargeable battery devices is operated in the normal state, the battery units of the rechargeable battery devices are charged with a charge current flowing through the second switch modules of the rechargeable battery devices during the charge mode of said power supplying system, and generates a total voltage output equal to a sum of voltage outputs supplied respectively by the battery units of the rechargeable battery devices during the discharge mode of the power supplying system.

For each of the rechargeable battery devices in the normal state, when the control module detects that a voltage of any one of the rechargeable batteries of the battery unit is not within a predetermined voltage range during the charge or discharge mode of the power supplying system, a corresponding one of the rechargeable battery devices switches from the normal state to the abnormal state, thereby establishing a conduction path between the first and second ends of the first switch module of the corresponding one of the rechargeable battery devices to terminate charging or discharging of the battery unit of the corresponding one of the rechargeable battery devices.

Other features and advantages of the present invention will become apparent in the following detailed description of the preferred embodiments with reference to the accompanying drawings, of which:
Figure 1 is a schematic circuit block diagram illustrating the preferred embodiment of a power supplying system according to the present invention;
Figure 2 is a schematic circuit block diagram illustrating a rechargeable battery device of the preferred embodiment;
Figure 3 is an equivalent electrical circuit diagram of the preferred embodiment during a charge mode when each rechargeable battery device is in a normal state; and
Figure 4 is an equivalent electrical circuit diagram of the preferred embodiment during the charge mode when one rechargeable battery device is switched from the normal state to an abnormal state.

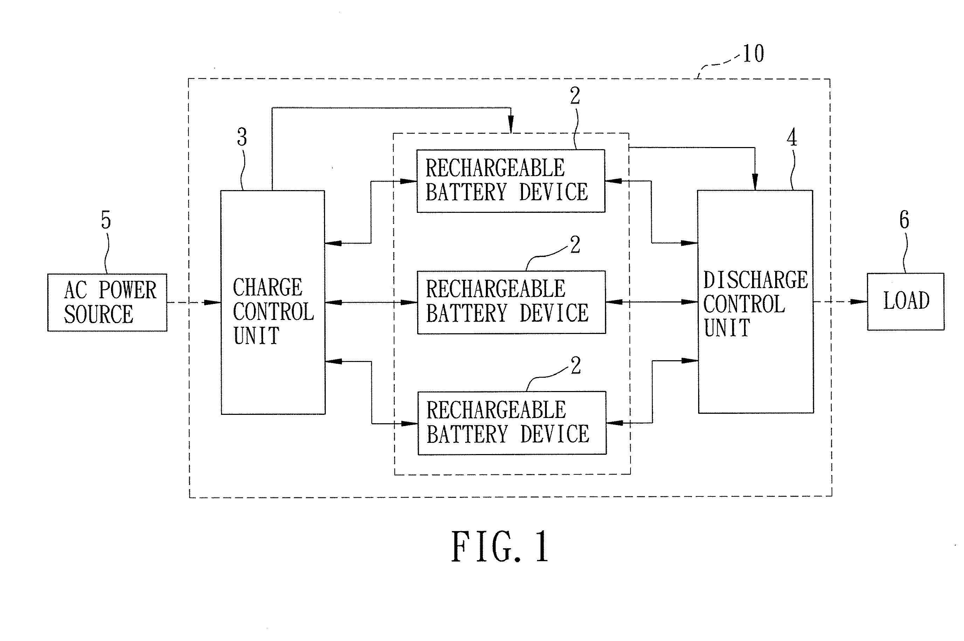

Referring to Figure 1, the preferred embodiment of a power supplying system 10 according to the present invention is shown to include a plurality of rechargeable battery devices 2, a charge control unit 3, and a discharge control unit 4. The power supplying system 10 is operable between a charge mode and a discharge mode.

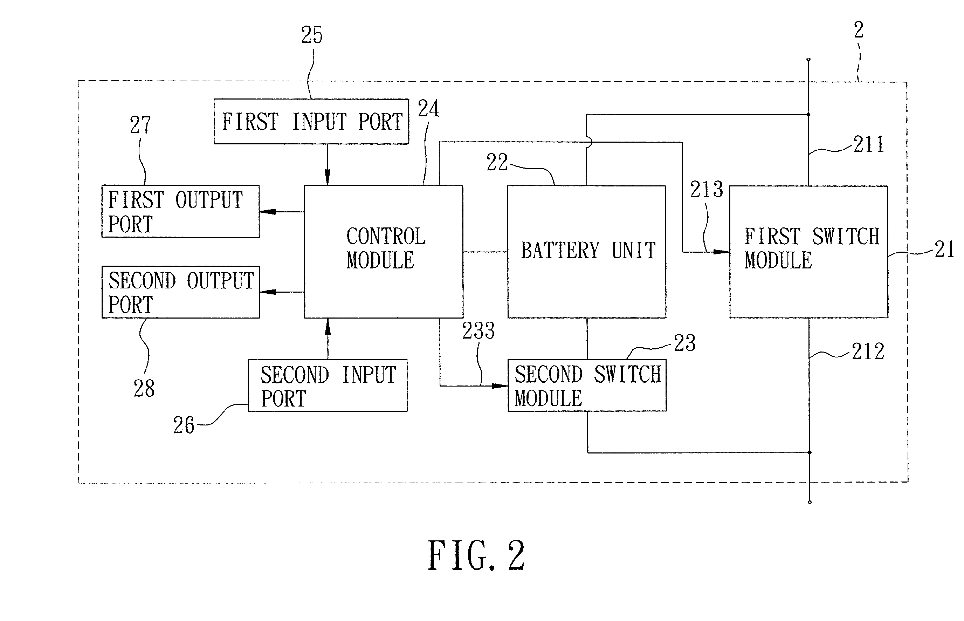

The rechargeable battery devices 2 are connected in series with each other. Each rechargeable battery device 2 is operable between a normal state and an abnormal state. Referring further to Figure 2, each rechargeable battery device 2 includes a first switch module 21, a series connection of a battery unit 22 and a second switch module 23, a control module 24, first and second input ports 25, 26, and first and second output ports 27, 28. The first switch modules 21 of the rechargeable battery devices 2 are connected in series with each other.

For each rechargeable battery device 2, the first switch module 21 has a first end 211, a second end 212, and a first control end 213 for receiving a first control signal such that the first switch module 21 is operable, based on the first control signal, in one of an ON-state, where the first end 211 is connected to the second end 212, and an OFF-state, where the first end 211 is disconnected from the second end 212. The battery unit 22 has a positive electrode coupled to the first end of the first switch module 21, and a negative electrode. The battery unit 22 includes a plurality of rechargeable batteries connected in series with each other. The second switch module 23 is connected between the negative electrode of the battery unit 22 and the second end 212 of the first switch module 21. The second switch module 23 has a second control end 233 for receiving a second control signal such that the second switch module 23 is operable, based on the second control signal, in one of an ON-state, where the battery unit 22 is connected to the second end 212 of the first switch module 21 through the second switch module 23, and an OFF-state, where the battery unit 22 is disconnected from the second end 212 of the first switch module 21. The first and second input ports 25, 26 are used to receive respectively a charge command signal and a discharge command signal.

The control module 24 is connected electrically to the battery unit 22, the first control end 213 of the first switch module 21, and the second control end 233 of the second switch module 23. The control module 24 is operable to output respectively the first and second control signals to the first and second control ends 213, 233 of the first and second switch modules 21, 23 such that the first and second switch modules 21, 23 are respectively operated in the OFF-state and the ON-state based on the first and second control signals from the control module 24 when in the normal state and such that the first and second switch modules 21, 23 are respectively operated in the ON-state and the OFF-state based on the first and second control signals from the control module 24 when in the abnormal state. The first and second output ports 27, 28 are coupled to the control module 24. In this embodiment, each of the first and second input ports 25, 26, and the first and second output ports 27, 28 can be implemented by an optical coupling transmission element.

Each rechargeable battery device 2 is operated in the normal state upon receipt of one of the charge command signal and the discharge command signal by the control module 24 thereof through a corresponding one of the first and second input ports 25, 26 thereof. When each rechargeable battery device 2 is operated in the normal state, the battery units 22 of the rechargeable battery devices 2 connected in series with each other are charged with a charge current flowing through the second switch modules 23 of the rechargeable battery devices 2 during the charge mode of the power supplying system 10, and generate a total voltage output equal to a sum of voltage outputs supplied respectively by the battery units 22 of the rechargeable battery devices 2 during the discharge mode of the power supplying system 10.

For each rechargeable battery device 2 in the normal state, when the control module 24 detects that a voltage of any one of the rechargeable batteries of the battery unit 22 is not within a predetermined voltage range during the charge of discharge mode of the power supplying system 10, a corresponding rechargeable battery device 2 switches from the normal state to the abnormal state, thereby establishing a conduction path between the first and second ends 211, 212 of the first switch module 21 of the corresponding rechargeable battery device 2 to terminate charging or discharging of the battery unit 22 of the corresponding rechargeable battery device 2.

For each rechargeable battery device 2 switched from the normal state to the abnormal state during the charge mode of the power supplying system 10, the control module 24 generates a charge-abnormal signal indicating abnormal charge condition of the battery unit 22, and outputs the charge-abnormal signal through the first output port 27.

For each rechargeable battery device 2 switched from the normal state to the abnormal state during the discharge mode of the power supplying system 10, the control module 24 generate a discharge-abnormal signal indicating abnormal discharge condition of the battery unit 22, and output the discharge-abnormal signal through the second output port 28.

The charge control unit 3 is coupled to the first input port 25 and the first output port 27 of each rechargeable battery device 2, and is adapted to be connected electrically to an AC power source 5 for receiving a voltage input therefrom. When the power supplying system 10 is in the charge mode, the charge control unit 3 is configured to output the charge command signal to the first input port 25 of each rechargeable battery device 2, to generate a charge voltage associated with the charge current based on the voltage input, and to adj ust the charge voltage based on the charge-abnormal signal from the first output port 27 of any one of the rechargeable battery devices 2. For example, when the number of the rechargeable battery devices 2 each generating the charge-abnormal signal increases, the charge control unit 3 reduces the charge voltage.

The discharge control unit 4 is coupled to the second input port 26 and the second output port 28 of each rechargeable battery device 2, and is adapted to be connected electrically to a load 6. When the power supplying system 10 is in the discharge mode, the discharge control unit 4 is configured to output the discharge command signal to the second input port 26 of each rechargeable battery device 2, to generate output power that is supplied to the load 6 based on the total voltage output from the rechargeable battery devices 2, and to adjust the output power based on the discharge-abnormal signal from any one of the rechargeable battery devices 2. In this embodiment, the load 6 is composed of a motor. The discharge control unit 4 serves as a motor controller for controlling operation of the motor based on the output power.

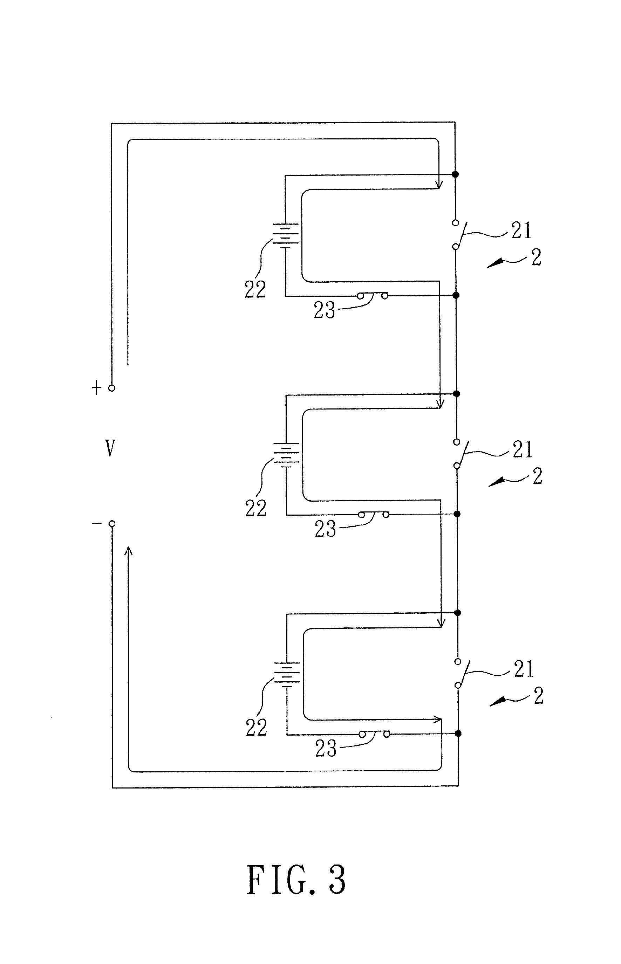

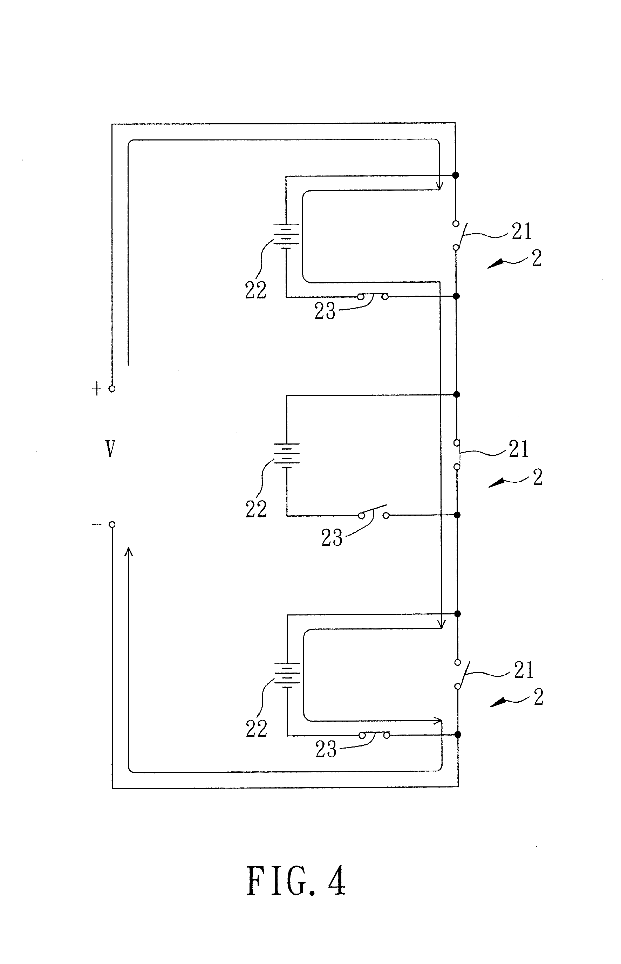

Figure 3 illustrates an equivalent electrical circuit diagram of the power supplying system 10 during a charge mode when each rechargeable battery device 2 is in the normal state. Figure 4 illustrates an equivalent electrical circuit diagram of the power supplying system 10 during the charge mode when a middle rechargeable battery device 2 is in the abnormal state. It is noted that the charge voltage (V') in Figure 4 generated by the charge control unit 3 is reduced compared to the charge voltage (V) in Figure 3 as a result of terminating charging of the battery unit 22 of the middle rechargeable battery device 2.

In sum, because the control module 24 of each rechargeable battery device 2 can establish the conduction path between the first and second ends 211, 212 of the first switch module 21 upon detecting the discharge-abnormal condition during the discharge mode of the power supplying system 10, the system supplying system 10 still supplies the power output to the load 6. Therefore, when the power supplying system 10 of the present invention is applied to an electric vehicle, sudden shut-down of the electric vehicle can be avoided.

## Claims

1. A rechargeable battery device (2) operable between a normal state and an abnormal state, said rechargeable battery device (2) **characterized by**:
a first switch module (21) having a first end (211), a second end (212), and a first control end (213) for receiving a first control signal such that said first switch module (21) is operable, based on the first control signal, in one of an ON-state, where said first end (211) is connected to said second end (212), and an OFF-state, where said first end (211) is disconnected from said second end (212);
a series connection of a battery unit (22) and a second switch module (23) connected between said first and second ends (211, 212) of said first switch module (21), said battery unit (22) including a plurality of rechargeable batteries connected in series with each other, said second switch module (23) having a second control end (233) for receiving a second control signal such that said second switch module (23) is operable, based on the second control signal, in one of an ON-state and an OFF-state; and
a control module (24) connected electrically to said battery unit (22), said first control end (213) of said first switch module (21) and said second control end (233) of said second switch module (23), said control module (24) being operable to output respectively the first and second control signals to said first and second control ends (213, 233) of said first and second switch modules (21, 23) such that said first and second switch modules (21, 23) are respectively operated in the OFF-state and the ON-state based on the first and second control signals from said control module (24) when in the normal state and such that said first and second switch modules (21, 23) are respectively operated in the ON-state and the OFF-state based on the first and second control signals from said control module (24) when in the abnormal state;
wherein, when said rechargeable battery device (2) is operated in the normal state, said battery unit is capable of being charged with a charge current flowing through said second switch module (23) or supplying a voltage output; and
wherein, when said control module (24) detects that a voltage of any one of said rechargeable batteries of said battery unit (2) is not within a predetermined voltage range during charging or discharging of said battery unit (22), said rechargeable battery device (2) is switched from the normal state to the abnormal state, thereby establishing a conduction path between said first and second ends (211, 212) of said first switch module (21) to terminate charging or discharging of said battery unit (22).

2. The rechargeable battery device (2) as claimed in Claim 1, wherein said battery unit (22) is connected to said first end (211) of said first switch module (21), and said second switch module (23) is connected to said second end (212) of said first switch module (21).

3. The rechargeable battery device (2) as claimed in Claim 1, further **characterized by** first and second input ports (25, 26) coupled to said control module (24) and adapted for receiving respectively an external charge command signal and an external discharge command signal;
wherein said rechargeable battery device (2) is operated in the normal state when said control module (24) receives one of the external charge command signal and the external discharge command signal through a corresponding one of said first and second input ports (25, 26).

4. The rechargeable battery device (2) as claimed in Claim 3, further **characterized by** first and second output ports (27, 28) coupled to said control module (24);
Wherein said control module (24) generates a charge-abnormal signal indicating abnormal charge condition of said battery unit (22) upon detecting that a voltage of any one of said rechargeable batteries of said battery unit (22) is not within the predetermined voltage range during charging of said battery unit (22), the charge-abnormal signal being outputted through said first output port (27); and
Wherein said control module (24) generates a discharge-abnormal signal indicating abnormal discharge condition of said battery unit (22) upon detecting that a voltage of any one of said rechargeable batteries of said battery unit (22) is not within the predetermined voltage range during discharging of said battery unit (22), the discharge-abnormal signal being outputted through said second output port (28).

5. A power supplying system (10) operable between a charge mode and a discharge mode, said power supplying system (10) **characterized by**:
a plurality of rechargeable battery devices (2) connected in series with each other, each of said rechargeable battery devices (2) being operable between a normal state and an abnormal state, and including
a first switchmodule (21) having a first end (211) , a second end (212), and a first control end (213) for receiving a first control signal such that said first switch module (21) is operable, based on the first control signal, in one of an ON-state, where said first end (211) is connected to said second end (212), and an OFF-state, where said first end (211) is disconnected from said second end (212),
a series connection of a battery unit (22) and a second switch module (23) connected between said first and second ends (211, 212) of said first switch module (21), said battery unit (22) including a plurality of rechargeable batteries connected in series with each other, said second switch module (23) having a second control end (233) for receiving a second control signal such that said second switch module (23) is operable, based on the second control signal, in one of an ON-state and an OFF-state, and
a control module (24) connected electrically to said battery unit (22), said first control end (213) of said first switch module (21) and said second control end (233) of said second switch module (23) , said control module (24) being operable to output respectively the first and second control signals to said first and second control ends (213, 233) of said first and second switch modules (21, 23) such that said first and second switch modules (21, 23) are respectively operated in the OFF-state and the ON-state based on the first and second control signals from said control module (24) when said rechargeable battery device (2) is in the normal state and such that said first and second switch modules (21, 23) are respectively operated in the ON-state and the OFF-state based on the first and second control signals from said control module (24) when said rechargeable battery device (2) is in the abnormal state;
wherein, when each of said rechargeable battery devices (2) is operated in the normal state, said battery units (22) of said rechargeable battery devices (2) are charged with a charge current flowing through said second switchmodules (23) of said rechargeable battery devices (2) during the charge mode of said power supplying system (10), and generate a total voltage output equal to a sum of voltage outputs supplied respectively by said battery units (22) of said rechargeable battery devices (2) during the discharge mode of said power supplying system (10); and
wherein, for each of said rechargeable battery devices (2) in the normal state, when said control module (24) detects that a voltage of any one of said rechargeable batteries of said battery unit (22) is not within a predetermined voltage range during the charge or discharge mode of said power supplying system (10), a corresponding one of said rechargeable battery devices (2) switches from the normal state to the abnormal state, thereby establishing a conduction path between said first and second ends (211, 212) of said first switch module (21) of the corresponding one of said rechargeable battery devices (2) to terminate charging or discharging of said battery unit (22) of the corresponding one of said rechargeable battery devices (2).

6. The power supplying system (10) as claimed in Claim 5, wherein, for each of said rechargeable battery devices (2), said battery unit (22) is connected to said first end (211) of said first switch module (21), and said second switch module (23) is connected to said second end (212) of said first switch module (21).

7. The power supplying system (10) as claimed in Claim 5, wherein:
each of said rechargeable battery devices (2) further includes first and second input ports (25, 26) coupled to said control module (24) for receiving respectively a charge command signal and a discharge command signal;
when said power supplying system (10) is in the charge mode, said control module (24) of each of said rechargeable battery devices (2) receives the charge command signal through said first input port (25);
when said power supplying system (10) is in the discharge mode, said control module (24) of each of said recharge battery devices (2) receives the discharge command signal through said second input port (26); and
each of said rechargeable battery devices (2) is operated in the normal state upon receipt of one of the charge command signal and the discharge command signal by said control module (24).

8. The power supplying system (10) as claimed in Claim 7, wherein:
each of said rechargeable battery devices (2) further includes first and second output ports (27, 28) coupled to said control module (24);
for each of said rechargeable battery devices (2) switched from the normal state to the abnormal state during the charge mode of said power supplying system (10), said control module (24) generates a charge-abnormal signal indicating abnormal charge condition of said battery unit (22), and outputs the charge-abnormal signal through said first output port (27); and
for each of said rechargeable battery devices (2) switched from the normal state to the abnormal state during the discharge mode of said power supplying system (10), said control module (24) generates a discharge-abnormal signal indicating abnormal discharge condition of said battery unit (22), and outputs the discharge-abnormal signal through said second output port (28).

9. The power supplying system (10) as claimed in Claim 8, further **characterized by**:
a charge control unit (3) coupled to said first input port (25) and said first output port (27) of each of said rechargeable battery devices (2) and adapted to receive a voltage input from an AC power source (5), wherein, when said power supplying system (10) is in the charge mode, said charge control unit (3) is configured to output the charge command signal to said first input port (25) of each of said rechargeable battery devices (2), to generate a charge voltage associated with the charge current based on the voltage input, and to adjust the charge voltage based on the charge-abnormal signal from said first output port (27) of any one of said rechargeable battery devices (2); and
a discharge control unit (4) coupled to said second input port (26) and said second output port (28) of each of said rechargeable battery devices (2) and adapted to be connected electrically to a load (6), wherein, when said power supplying system (10) is in the discharge mode, said discharge control unit (4) is configured to output the discharge command signal to said second input port (27) of each of said rechargeable battery devices (2), to generate output power that is supplied to the load (6) based on the total voltage output from said rechargeable battery devices (2), and to adjust the output power based on the discharge-abnormal signal from said second input port (28) of any one of said rechargeable battery devices (2).
